# EUROPEAN PATENT SPECIFICATION

(11) **EP 1 774 748 B1**
(45) Date of publication and mention of the grant of the patent: **14.11.2007**
(21) Application number: 05748030.3
(22) Date of filing: 14.06.2005
(51) Int. Cl.: H04L 29/06, G06F 9/445, H04Q 7/32

(54) **Method and apparatus for application download in communication systems supporting presence services**
Verfahren und Vorrichtung zum Herunterladen von Anwendungen in Präsenzdienste unterstützenden Kommunikationssystemen
Procédé et appareil pour le téléchargement de logiciel dans systèmes de communication supportant services de présence

(30) Priority: 25.06.2004 EP 04425466
(43) Date of publication of application: 18.04.2007
(73) Proprietor: Siemens Mobile Communications S.p.A., 20126 Milano (IT)
(72) Inventor: BOSSOLI, Francesca, I-50019 Sesto Fiorentino (FI) (IT); PENSA, Simone, I-20090 Buccinasco (IT)
(74) Representative: Giustini, Delio
(86) International application number: PCT/EP2005/006339
(87) International publication number: WO 2006/002750

(56) References cited:
- WO-A-20/04010338
- US-A1- 2003 040 280
- US-B1- 6 269 456
- TOSI D: "An advanced architecture for push services" FOURTH INTERNATIONAL CONFERENCE ON WEB INFORMATION SYSTEMS ENGINEERING WORKSHOPS WISEW'03, 13 December 2003 (2003-12-13), pages 193-200, XP010697505 ROME, ITALY
- OPEN MOBILE ALLIANCE: "Generic Content Download over the Air Specification, Version 1.0" ANNOUNCEMENT OPEN MOBILE ALLIANCE, XX, XX, 20 June 2002 (2002-06-20), pages 1-40, XP002264099 cited in the application
- "3GPP ; Technical Specification Group Services and System Aspects; Support of Push service (Release 5)" 3GPP TR 23.875 V5.1.0, XX, XX, March 2002 (2002-03), pages 1-70, XP002290028

## Description

### Field of the invention

The present invention refers to communication systems supporting presence services, and more particularly it concerns a method of and an apparatus for automatic software application download to users of said services in such systems.

Preferably, but not exclusively, the invention is intended for application download to users of mobile communication systems.

### Background of the Invention

Software download through mobile networks is becoming an important issue for mobile telecommunications industry and operators. Already in present mobile communication systems there is an increasing demand by the users for software download concerning ringing tones, screen savers, games and Java midlets. Users of mobile communication systems of the third generation and beyond are expected to make wide use of software download for upgrading or reconfiguring their terminals or for updating software applications existing on their terminals.

The paper "A PUSH download architecture for software defined radios", presented by S. Jamadagni and M.N. Umesh at the 2000 IEEE International Conference on Personal Mobile Communications, Hyderabad, India, 17 - 20 December 2000, and published at pages 404 and ff. of conference proceedings, discloses a solution to the problem of downloading software to a radio terminal in a Software Defined Radio (SDR) environment, both for initial download and for subsequent updating. The possibility of adopting a PUSH technique (that is, the information intended for a user is sent by the network without any request by the user) is suggested, in order to reduce network traffic. The technique referred to as "Pure-Push" provides for a periodic software download to the client, who however is to periodically inform the system about the actual configuration of his/her terminal. This entails a rather high usage of the uplink radio resources. Also the need for a mutual authentication whenever an update is to be carried out adds to the high usage of radio resources. Moreover, the application of the proposals to the SDR environment entails a dependency on the access technology. This is clearly a problem for future systems where different access technologies will coexist.

EP 03425706.3 discloses a method of and an apparatus for mass software download for terminal reconfiguration, exploiting the Multimedia Broadcast/Multicast Service (MBMS) defined by 3GPP (3rd Generation Partnership Project). Service (MBMS) defined by 3GPP (3rd Generation Partnership Project).

A software download method and apparatus including the features of the preamble of claims 1 and 3, respectively, is disclosed in the paper "An Advanced architecture for Push Services", D. Tosi, Fourth International Conference on Web Information Systems Engineering Workshops (WISEV 03), Rome (Italy), 13 December 2003, pages 193 - 200 of the conference proceedings.

The prior art tries downloading a newly available software item to all subscribers needing it, irrespective of their presence status. The presence information is subscribed for only in case of unsuccessful download, in order to decide when repeating download to subscribers to which the software could not be delivered. This entails a waste of radio resources. Moreover, no previous notification of the availability of a new software item, of the size thereof and of the estimated delivery time is provided for, whereby a user can lack resources at the delivery time. This compels to try again the download and contributes to the waste of radio resources.

Previous notification of the estimated time of a forthcoming download is disclosed in WO-A 2004/010338. The system disclosed in that document does not support presence services, and hence does not exploit presence information as a condition for download, and does not include size information into the notification message.

### Summary of the invention

The present invention aims at providing a download method and apparatus that are wholly independent of the access technology and that optimise the radio resource usage by suitably exploiting the presence information and organising the notification message.

A method of software download to users of a mobile communication system supporting presence services, includes the steps of: storing information about software items concerned by a download service, as well a user profile for each user that is a subscriber of the download service, said profile including information about any such software item present in a user equipment; monitoring the presence status of the subscribers; and, when a software item is newly made available by a provider, identifying, based on the stored information, the subscribers needing said item and downloading it by means of PUSH message to such subscribers. The monitoring step is performed since a subscriber's registration with the download service; the downloading step is preceded by a step of notifying the existence of said new software item to the subscribers needing it, through a notification message containing information about the size of the software item and an estimated delivery time; and said notifying and downloading steps are carried out for subscribers, among those needing said software item, who are in a first presence status indicating that they are logged on to the system.

An apparatus for implementing the method comprises: a storage unit, storing information about software items concerned by a download service and, for each user that is a subscriber of the download service, a user profile including information about any such software item present in a user equipment; a download server, connected to: an application provider, for receiving therefrom software items to be downloaded to the subscribers; a presence server, for monitoring the presence status of the subscribers; said storage unit, for recovering therefrom the user profile and detecting whether any subscriber needs a software item provided by the software provider; and to a communication network of the communication system for delivering said software item to the subscribers; and a PUSH server connected to the download server for peforming software download by means of PUSH messages. The download server comprises means for generating and sending to the subscribers needing a software item made available by said provider, before the actual download, a notification message informing the subscribers of the availability of such a software item, of the size thereof and of an estimated delivery time, and said download server is arranged to co-operate with said presence server so as to monitor the presence status of the subscribers since their registration with the download service and to send the notification message and perform the download only to subscribers, among those needing that software item, who are in a first presence status indicating that they are logged on to the system.

By notifying the concerned subscribers of the forthcoming download of a software item and of the size of said item as well as of an estimated delivery time, and by sending the notification and subsequently the software item to the subscribers that are logged on or when they become logged on, radio resource exploitation is optimised, in that no resource is used for trying download towards subscribers that are not available or have insufficient available resources, thereby dispensing with repetition of unsuccessful downloads.

### Brief description of the drawings

A preferred embodiment of the invention, given by way of non-limiting example, will now be disclosed with reference to the accompanying drawings, in which:
- Fig. 1 is a schematic diagram showing the application of the invention applied in a mobile communication system;
- Fig. 2 is a schematic block diagram of the download server; and
- Fig. 3 is a diagram of the download procedure.

### Detailed description of the preferred embodiments

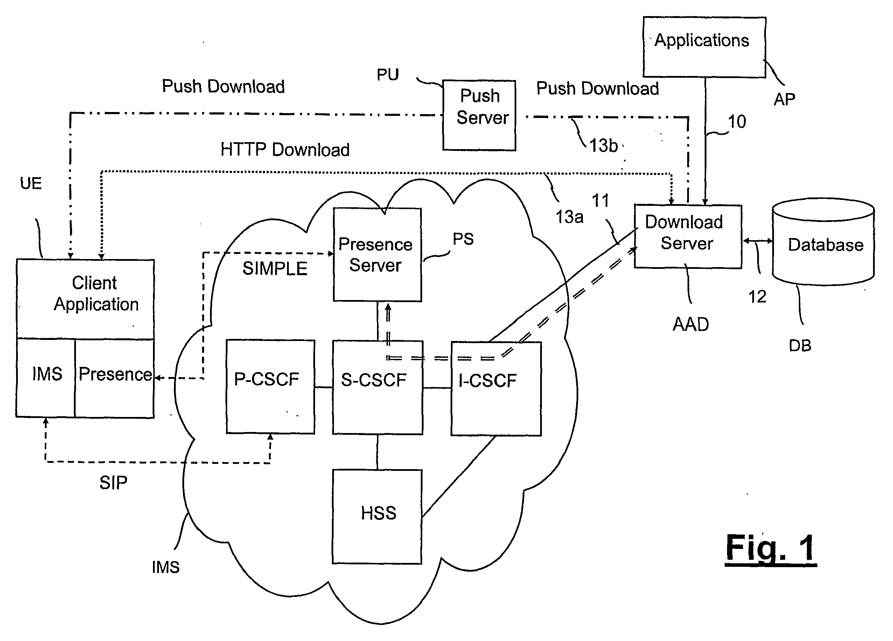

The embodiment shown in Fig. 1 refers, by way of example, to software download to users having access to a presence service organised according to 3GPP (3rd Generation Partnership Project) specifications. The described solution envisages the involvement of the so-called IMS [IP (Internet Protocol) Multimedia Subsystem] architecture and Presence Enabling Services.

Under this assumption, the equipment of the end users, one of which is shown at UE, has a presence IMS client (as denoted by blocks IMS and Presence within UE), i.e. the end user is able to access to IMS and Presence Services, by using SIP (Session Initiation Protocol) and SIMPLE (SIP for Instant Messaging and Presence Leveraging Extensions) protocols, the latter being the SIP extension for presence. Details about IMS and Presence Services within a 3GPP system can be found in 3GPP technical specifications TS 23.228 and 24.228 for IMS, and TS 22.141 and 23.141 for Presence Services.

The IMS architecture is here schematised by the units intended with Call Session Control Functions (CSCF), more specifically P-CSCF (Proxy CSCF), S-CSCF (Serving CSCF) and I-CSCF (Interrogating CSCF), by the presence server PS, and by the Home Subscriber Server HSS, i.e. the unit entrusted with storage of the data relevant to the presence service users. Those units are all defined in the specifications indicated above. Presence server PS and block P-CSCF are shown as dialoguing with the corresponding presence and IMS client functions in terminal UE. The dialogue protocol (SIMPLE and SIP, respectively) is also indicated.

For sake of simplicity, the chain of the conventional mobile network units (namely, radio access network, core network, SGSN, GGSN) through which a user equipment has access to IMS is not shown.

End users UE also have on their equipment a number of software applications (Client Application in block UE) and the invention provides a method of and an apparatus for updating such applications or loading new applications, by leveraging the presence information of the users themselves and the IMS architecture. The service is thus offered to:
- applications providers, which are able to easily provide software download for updating client applications;
- end users, who receive download nearly automatically, without making ad hoc query to the application server.

Download is managed by a download server AAD (Automatic Application Download), which is part of the operator network, like IMS. Server AAD is connected, as shown by line 10, to an application repository owned by an application provider AP. AAD receives the software to be downloaded (for instance, a new patch or a new release) from the provider and forwards it to the concerned users, if they are logged on (presence status "on-line").

In order AAD can exploit the presence information of the users, it is to interact with presence server PS, as schematised by the dashed double line. Reference 11 denotes the connection between AAD and IMS (in particular I-CSCF). For each registered user, AAD subscribes to PS for retrieving presence information and being always informed on the presence status ("on-line"/"off-line") of the subscribers. Subscription to the service by a user UE in turn implies that the user authorises AAD to get his/her presence status, so that AAD is an authorised watcher.

In order to allow an almost automatic download, download server AAD is connected, as indicated by line 12, with a data base DB storing information about the applications installed to the clients and managed by the service, together with end user identification. A possible organisation of the contents of data base DB can be as shown in the following table for two applications:

| Application | Version | End user |
|---|---|---|
| Application1 | 1.0 | u1, u3 |
| | 1.5 | u4, u7 |
| | 2.0 | u5, u2 |
| Application2 | ab01 | u10, u17 |
| | ab02 | u3, u13 |

Thanks to the provision of database DB, as soon as a new version of software is available, AAD can recognise which subscribers need it and, base upn the presence information, inform "on-line" subscribers that a new patch is available. The patch can be delivered to the end user following one of two mechanisms:
1) AAD sends a notification message towards the end user device, which will start an HTPP download session (dotted line arrow 13a); software download by means of an HTTP session is known in se, as disclosed for instance in the document "Generic Content Download Over the Air Specification" (OMA-Download-OTA-v.1_0-20020912-p published by OMA (Open Mobile Alliance);
2) The software upgrade is sent using a PUSH message after the end user confirmation (dashed-and-dotted line arrow 13b).

The first approach does not form part of the invention. The second approach is preferable, even if it requires the insertion of a Push Server PU, as it minimises impact on user experience: download mechanisms should be nearly automatic, apart from end user confirmation. The end user decides at subscription time the mechanism of download he/she prefers. This parameter can be modified at any time by changing the service preferences.

The tasks and the operation of a push server are disclosed in 3GPP TR 23.974 v2.0.0, Support of push Services.

In case the user is "off-line" at the moment the update becomes available, a mechanism of store-and-forward can be envisaged.

Before starting download, AAD modifies the end user status, by sending a publishing message to PS, in which AAD specifies that the user is in a "busy" status: in such way any other users/applications will not disturb the end user during download. At the end of download process, AAD restores the end user status as "on-line". AAD is therefore an authorised Network Agent, i.e. it is acknowledged by presence server PS as a so-called "presence information provider".

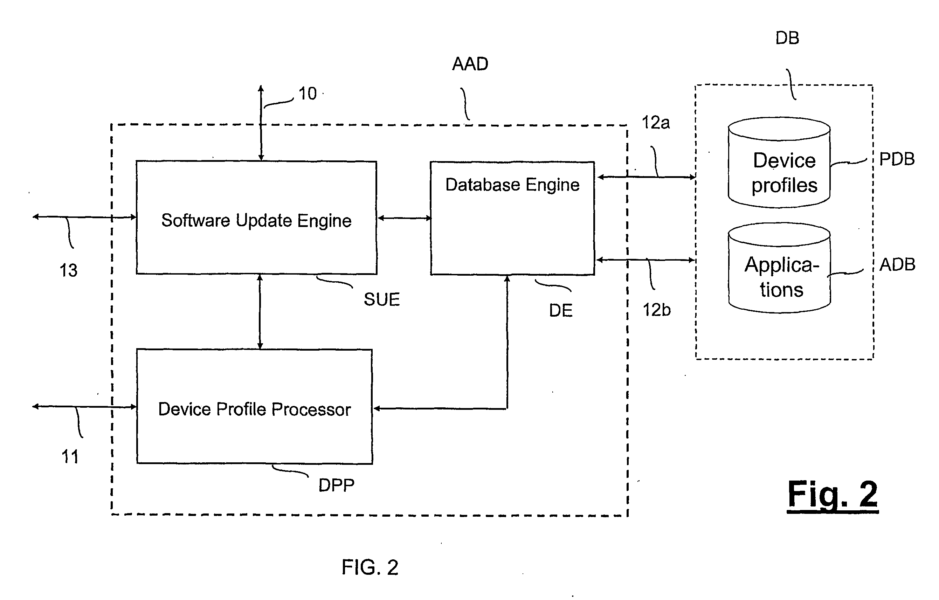

Fig. 2 shows a functional diagram of database DB and download server AAD.

Database DB has been shown as being formed by an application database ADB, storing the information about the most recent release of each application concerned by the download service, and device profile database PDB, which stores the information about the applications (and the relevant releases) present in the subscribers' equipment, as well as the subscriber's identities. PDB and ADB are connected to AAD through respective connections 12a, 12b, forming connection 12 of Fig. 1.

AAD in turn comprises a software update engine SUE, a database engine DE and a device profile processor DPP. Software update engine SUE receives the new applications or application updates from application provider AP, through connection 10, and recovers the list of the users who need the application or the update from device profile database PDB, through database engine DE interfacing AAD with database DB. The list is filtered by device profile processor DPP, which is connected to IMS (Fig. 1) through connection 11 and gets from presence server PS the information about which users in the list are presently on line and are therefore available to receive the update. Device profile processor DPP can then command the actual download from SUE to the on-line involved users through connection 13, corresponding to either of connections 13a, 13b in Fig. 1, depending on the download technique. At the same time, SUE can update application database ADB through DE, by writing the identity of the new release (or the new application) that has become available. Before the download, DPP modifies the user's presence information, as stated before. Once the download has ended DPP updates device profile database PDB, always through DE, by writing the information that a certain release of an application or a certain application has been supplied to certain users.

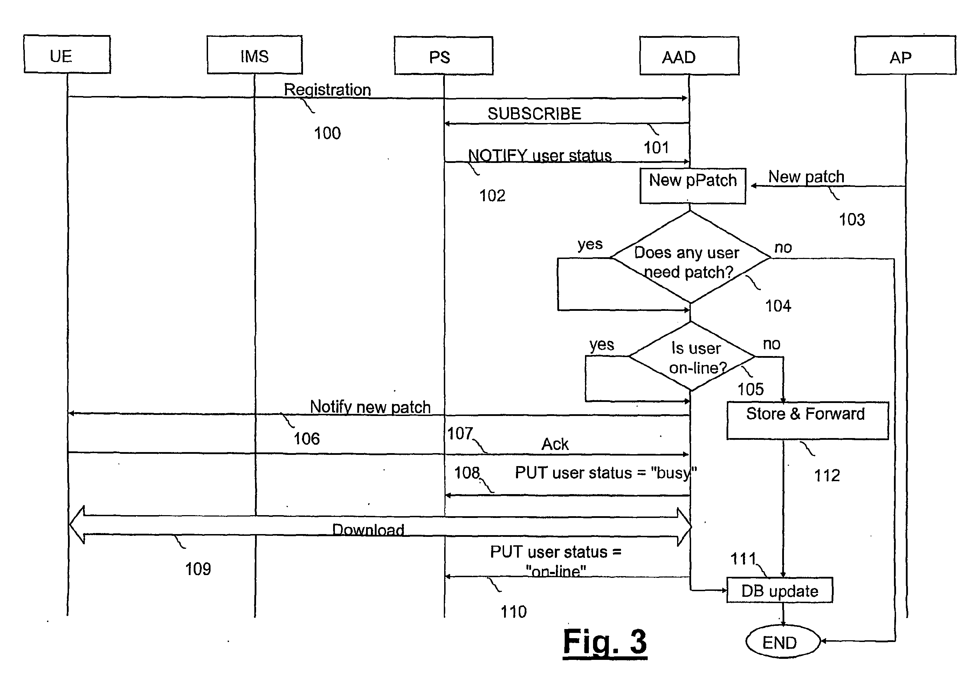

The download mechanism is disclosed also with reference to the signalling flow chart of Fig. 3. The procedure is the same in case of both HTTP and PUSH download. The Figure shows the minimum message exchange that allows an end user to access the service.

The first step is the end user registration with the service (step 100). In such phase, the user informs AAD about the applications he/she has and the relevant versions. This information is stored in database DB (Fig. 1) together with the user identity. At the subscription, the user specifies also the desired download mechanism, as stated before.

For each subscriber, AAD performs the SUBSCRIBE procedure to PS for end user presence status (step 101). Thus AAD becomes an authorised watcher, according to TS 23.141, and PS will notify the end-user presence status ("on-line"/"off-line") to AAD (step 102).

When application provider AP informs AAD that a new software release is available (step 103), AAD checks in DB whether any subscriber needs this release (step 104). If no user needs the release, the process ends. If some users need the release, the following user-application relations can occur:
a) Updated: the application is installed and updated to the previous release;
b) Out of date: the application is installed but not updated to the previous release;
c) Not installed: the application is not installed on the device.

AAD verifies the status of such user(s) (step 105). In case the user status is "on-line" (output "yes") of step 105, AAD notifies to the user that an update for his/her applications is available (step 106). In particular, referring to user-application relations indicated above, AAD informs the end user that:
a) a new update is available for an application;
b) multiple updates are available for the application;
c) a new application is available.

If the user acknowledges the update (step 107), the download session is started (step 109), and AAD updates the end user presence information to "busy" by sending a PUBLISH message the PS (step 108). At the end of the download process, AAD will turn the end user presence status to "on-line" (step 110) and will update database DB (step 111). At that point, the process ends.

In case the user status is "off-line" (output "no" of step 105), the download process will not start and a store-and-forward mechanism can be adopted (step 112) for supplying the users with the software later on. The mechanism can provide for carrying out the download next time a new update is available or when the user status will change to "on-line". After the forward, the database will be updated as before.

Note that the download has been shown by a bi-directional arrow to take into account that in the case of HTTP download a certain dialogue between the user and the download server is necessary, as it is well known to the skilled in the art. Moreover, for sake of simplicity of the drawing, the updates of the application and device profile databases have been jointly shown at step 112.

Thus, the preceding description clearly shows that the invention solves the problems of the prior art. The download is substantially automatically managed by download server AAD, based on the presence status of the users, which only have to accept the update upon the notification by AAD. There is no need for the users to communicate their situation to the server. Thus the procedure is very simple and, in case of application to mobile systems, there is no unnecessary uplink radio resource occupation. Moreover, the service is independent of a specific access technique.

It is evident that the above description has been given by way of non-limiting example and that changes and modifications are possible without departing from the scope of the invention. In particular, the skilled in the art will have no problem in adapting the disclosed embodiment to presence services that do not exploit IMS architecture, by changing values "on-line", "off-line", "busy" status to the corresponding status provided for by the used protocols. Moreover, even if specific reference has been made to download of applications, the method and the apparatus can be used for downloading any kind of software item.

## Claims

1. A method of software download to users of a mobile communication system supporting presence services, comprising the steps of:
- storing information about software items concerned by a download service, as well a user profile for each user that is a subscriber of the download service, said profile including information about any such software item present in a user equipment (UE);
- monitoring the presence status of the subscribers; and
- when a new software item is made available by a provider (AP), identifying, based on the stored information, the subscribers needing said new software item and downloading it by means of PUSH message to at least part of such subscribers;
wherein: said monitoring step is performed since a subscriber's registration with the download service; said downloading step is preceded by a step of notifying the existence of said new software item to the subscribers needing it, through a notification message containing information about the size of the software item and an estimated delivery time; and said notifying and downloading steps are carried out for subscribers, among those needing said software item, who are in a first presence status indicating that they are logged on to the system.

2. The method according to claim 1, **characterised in that** the download is automatically performed upon an acknowledgement by each concerned subscriber.

3. An apparatus for downloading software to users of a mobile communication system supporting presence services, comprising:
- a storage unit (DB), storing information about software items concerned by a download service and, for each user that is a subscriber of the download service, a user profile including information about any such software item present in a user equipment (UE);
- a download server (AAD), connected to: a software provider (AP), for receiving therefrom software items to be downloaded to the subscribers; a presence server (PS) for monitoring the presence status of the subscribers; said storage unit (DB), for recovering the user profile and detecting whether any subscriber needs a software item made available by the software provider (AP); and to a communication network (13, 13a, 13b) of said telecommunication system for delivering said software item to the subscribers; and
- a PUSH server (PU) connected to the download server (AAD) for performing software download by means of PUSH messages;
wherein said download server (AAD) comprises means for generating and sending to the subscribers needing a software item made available by said provider (AP), before the actual download, a notification message informing the subscribers of the availability of such a software item, of the size thereof and of an estimated delivery time, and in that said download server (AAD) is arranged to co-operate with said presence server (PS) so as to monitor the presence status of the subscribers since their registration with the download service and to send the notification message and perform the download only to subscribers, among those needing that software item, who are in a first presence status indicating that they are logged on to the system.

4. An apparatus as claimed in claim 3, **characterised in that** said download server (AAD) is arranged to automatically perform said download upon receiving an acknowledgement of the notification by the subscribers.

## Patentansprüche

1. Verfahren zum Durchführen von Software-Downloads zu Nutzern eines Präsenzdienste unterstützenden Mobilkommunikationssystems, wobei dieses Verfahren folgende Schritte enthält:
- Speichern von Informationen über mit einem Download-Dienst in Zusammenhang stehende Softwarekomponenten, außerdem Speichern eines Nutzerprofils für jeden Nutzer, der Teilnehmer des Download-Dienstes ist, wobei das besagte Profil Informationen über jede in einer Nutzerausrüstung (UE) vorhandene Softwarekomponente enthält;
- Überwachen des Präsenzstatus der Teilnehmer; und
- sobald eine neue Softwarekomponente durch einen Provider (AP) verfügbar gemacht worden ist - Identifizieren der die besagte neue Softwarekomponente benötigenden Teilnehmer auf der Basis der gespeicherten Informationen sowie Downloaden dieser Softwarekomponente mithilfe einer an zumindest einen Teil dieser Teilnehmer gesandten PUSH-Message;
wobei der besagte Überwachungsschritt ab der Registrierung des Teilnehmers bei dem Download-Dienst durchgeführt wird;
wobei dem besagten Download-Schritt ein Schritt vorangeht, in dem die die besagte neue Softwarekomponente benötigenden Teilnehmer vom Vorhandensein dieser Softwarekomponente mittels einer Benachrichtigungs-Message benachrichtigt werden, die Informationen über die Größe und voraussichtliche Lieferzeit der Softwarekomponente enthält; und wobei die besagten Benachrichtigungs- und Download-Schritte für Teilnehmer durchgeführt werden, die zu denen gehören, die die besagte Softwarekomponente benötigen und sich außerdem in einem ersten Präsenzstatus befinden, der angibt, dass sie im System angemeldet sind.

2. Verfahren nach Anspruch 1, **dadurch gekennzeichnet, dass** der Download nach einer Bestätigung durch jeden betroffenen Teilnehmer automatisch durchgeführt wird.

3. Vorrichtung zum Herunterladen von Software zu Nutzern eines Präsenzdienste unterstützenden Mobilkommunikationssystems, wobei diese Vorrichtung Folgendes enthält:
- Eine Speichereinheit (DB), die Informationen über mit einem Download-Dienst in Zusammenhang stehende Softwarekomponenten sowie - für jeden Nutzer, der Teilnehmer des Download-Dienstes ist - ein Nutzerprofil einschließlich Informationen über jede solche in einer Nutzerausrüstung (UE) vorhandene Softwarekomponente enthält;
- Ein Download-Server (AAD), verbunden mit folgenden Einrichtungen: mit einem Softwareprovider (AP) zum Empfangen von Softwarekomponenten von diesem, die per Download zu den Teilnehmern gesandt werden sollen; mit einem Präsenzserver (PS) zum Überwachen des Präsenzstatus der Teilnehmer; mit der besagten Speichereinheit (DB) zum Abrufen des Nutzerprofils und zum Ermitteln, ob ein Teilnehmer eine vom Softwareprovider (AP) verfügbar gemachte Softwarekomponenten benötigt; und mit einem Kommunikationsnetz (13, 13a, 13b) des besagten Telekommunikationssystems zum Ausliefern der besagten Softwarekomponente an die Teilnehmer; und
- Ein PUSH-Server (PU), verbunden mit dem Downloadserver (AAD) zum Durchführen von Software-Downloads mittels PUSH-Messages;
wobei der besagte Downloadserver (AAD) Mittel zum Erzeugen und Senden (vor dem tatsächlichen Download) einer Benachrichtigungs-Message an Teilnehmer, die eine von dem besagten Provider (AP) zur Verfügung gestellte Softwarekomponente benötigen, enthält, wobei diese Message die Teilnehmer über die Verfügbarkeit dieser Softwarekomponente, über deren Größe und voraussichtliche Lieferzeit informiert; und wobei der besagte Downloadserver (AAD) dafür eingerichtet ist, mit dem besagten Präsenzserver (PS) zusammenzuarbeiten, um den Präsenzstatus der Teilnehmer ab ihrer Registrierung bei dem Download-Dienst zu überwachen und um das Senden der Benachrichtigungs-Message und das Durchführen des Downloads nur für diejenigen Teilnehmer durchzuführen, die die besagte Softwarekomponente benötigen und sich außerdem in einem ersten Präsenzstatus befinden, der angibt, dass sie im System angemeldet sind.

4. Vorrichtung nach Anspruch 3, **dadurch gekennzeichnet, dass** der besagte Download-Server (AAD) dafür eingerichtet ist, den besagten Download nach Empfangen einer Bestätigung der Benachrichtigung durch die Teilnehmer automatisch durchzuführen.

## Revendications

1. Procédé de téléchargement de logiciels vers des utilisateurs d'un système de communication mobile supportant des services de présence, comprenant les étapes de :
- stockage d'informations à propos d'éléments logiciels concernés par un service de téléchargement, ainsi que d'un profil utilisateur pour chaque utilisateur qui est un abonné du service de téléchargement, ledit profil incluant des informations à propos d'un quelconque tel élément logiciel présent dans un équipement utilisateur (UE) ;
- surveillance du statut de présence des abonnés ; et
- lorsqu'un nouvel élément logiciel est mis à disposition par un fournisseur (AP), identification, sur la base des informations stockées, des abonnés nécessitant ledit nouvel élément logiciel et téléchargement de celui-ci au moyen d'un message PUSH vers au moins une partie de tels abonnés ;
dans lequel ladite étape de surveillance est effectuée depuis l'inscription d'un abonné au service de téléchargement ; ladite étape de téléchargement est précédée d'une étape de notification de l'existence dudit nouvel élément logiciel aux abonnés nécessitant celui-ci, par l'intermédiaire d'un message de notification contenant des informations à propos de la taille de l'élément logiciel et d'une durée estimée de chargement ; et lesdites étapes de notification et de téléchargement sont exécutées pour les abonnés, parmi ceux nécessitant ledit élément logiciel, qui sont en un premier statut de présence indiquant qu'ils sont connectés au système.

2. Procédé selon la revendication 1, **caractérisé en ce que** le téléchargement est effectué automatiquement sur accusé de réception de chaque abonné concerné.

3. Appareil pour télécharger des logiciels vers des utilisateurs d'un système de communication mobile supportant des services de présence, comprenant :
- une unité de stockage (DB), stockant des informations à propos d'éléments logiciels concernés par un service de téléchargement, et, pour chaque utilisateur qui est un abonné du service de téléchargement, un profil utilisateur incluant des informations à propos d'un quelconque tel élément logiciel présent dans un équipement utilisateur (UE) ;
- un serveur de téléchargement (AAD), connecté à : un fournisseur de logiciels (AP), pour recevoir de celui-ci des éléments logiciels devant être téléchargés vers les abonnés ; un serveur de présence (PS) pour surveiller le statut de présence des abonnés ; ladite unité de stockage (DB), pour récupérer le profil utilisateur et détecter si un abonné quelconque nécessite un élément logiciel mis à disposition par le fournisseur de logiciels (AP) ; et à un réseau de communication (13, 13a, 13b) dudit système de télécommunication pour fournir ledit élément logiciel aux abonnés ; et
- un serveur PUSH (PU) connecté au serveur de téléchargement (AAD) pour effectuer le téléchargement du logiciel au moyen de messages PUSH ;
dans lequel ledit serveur de téléchargement (AAD) comprend un moyen pour générer et envoyer aux abonnés nécessitant un élément logiciel mis à disposition par ledit fournisseur (AP), avant le téléchargement effectif, un message de notification informant les abonnés de la disponibilité d'un tel élément logiciel, de la taille de celui-ci et d'une durée estimée de chargement, et en ce que ledit serveur de téléchargement (AAD) est agencé de manière à coopérer avec ledit serveur de présence (PS) de façon à surveiller le statut de présence des abonnés depuis leur inscription au service de téléchargement et à envoyer le message de notification et effectuer le téléchargement uniquement vers les abonnés, parmi ceux nécessitant cet élément logiciel, qui sont en un premier statut de présence indiquant qu'ils sont connectés au système.

4. Appareil selon la revendication 3, **caractérisé en ce que** ledit serveur de téléchargement (AAD) est agencé pour effectuer automatiquement ledit téléchargement à réception d'un accusé de réception de la notification par les abonnés.
